# FASCICULE DE BREVET EUROPEEN

(11) **EP 0 466 593 B1**
(45) Date de publication et mention de la délivrance du brevet: **27.03.1996**
(21) Numéro de dépôt: 91401931.0
(22) Date de dépôt: 10.07.1991
(51) Int. Cl.: H04L 7/033

(54) **Dispositif d'échantillonnage de données et système de transmission numérique de données en résultant**
Datenabtastschaltung und ein digitales Datenübertragungssystem dazu
Data sampling circuit and digital data transmission system therefor

(30) Priorité: 11.07.1990 FR 9008813
(43) Date de publication de la demande: 15.01.1992
(73) Titulaire: BULL S.A., F-78430 Louveciennes (FR)
(72) Inventeur: Marbot, Roland, F-75116 Paris (FR)
(74) Mandataire: Denis, Hervé

(56) Documents cités:
- EP-A- 0 081 750
- EP-A- 0 094 865
- WO-A-88/05236
- FR-A- 2 313 827

## Description

L'invention se rapporte à un procédé et à un dispositif d'échantillonnage de données et au système de transmission numérique de données en résultant.

L'invention s'applique en général à tout dispositif d'échantillonnage de données récurrentes à une période R dans un signal de données en série, comprenant un circuit de calage d'un signal d'horloge par rapport à un front du signal de données. L'invention peut s'adapter à tout système de transmission numérique de données en série. Dans un système synchrone, le signal d'horloge est transmis séparément du signal de données en série. Dans un système auto-rythmé, le signal d'horloge est incorporé dans le signal de données en série, puis récupéré à la réception. Dans les deux systèmes, l'information d'horloge est aussi associée à une information de synchronisation pour cadrer les octets après l'échantillonnage des données. L'invention est plus particulièrement avantageuse dans des systèmes à haut débit de transmission en série, à plus de 1 Gbps (1 Gigabit par seconde) par exemple. Les systèmes profitant le plus de l'invention sont notamment les systèmes de transmission auto-rythmée en réseau, tels que par exemple des réseaux locaux ou des réseaux de télévision numérique, en particulier de vidéophonie. L'application qui servira d'exemple concerne les réseaux de processeurs dans des systèmes informatiques. Le but de cette application est l'interconnexion de processeurs à des mémoires, d'autres processeurs ou à des périphériques externes ou internes.

Divers dispositifs d'échantillonnage de données récurrentes à une période R sont connus. Dans ces dispositifs, le signal d'horloge est calé par rapport à un front du signal de données en série de façon à correspondre dans chaque période R à une zone de stabilité du signal de données. Un tel calage optimise la détermination de la valeur logique de chaque donnée échantillonnée. Ordinairement, le signal d'horloge est calé sur l'instant R/2 suivant le front du signal de données. Le calage se heurte à deux difficultés majeures. La première difficulté réside dans la réalisation de la durée R/2. Jusqu'à présent, cette durée est généralement prédéterminée par un retard fixe. Il s'ensuit que le dispositif d'échantillonnage est limité aux données récurrentes à la période R ou à des périodes très voisines. L'échantillonnage à une fréquence différente nécessite un circuit de calage différent ou une modification manuelle du circuit de calage précédent. Cette première difficulté devient insurmontable pour l'échantillonnage de données à haut débit. Dans ce cas la période R est très courte et la demi-période devient supérieure au temps de transit du signal d'horloge dans un composant. Etant donné les grandes dérives des caractéristiques des composants de plaquettes semiconductrices différentes, un aussi faible retard ne peut pas encore être bien maîtrisé. La deuxième difficulté réside dans la présence aléatoire des fronts dans le signal de données. Il faut alors reconstituer les fronts absents par des dispositifs sophistiqués et limités à une certaine gamme de fonctionnement. Cette difficulté ressortira de la description du système connu suivant.

Un système auto-rythmé récent a été réalisé en circuits intégrés et adapté à des transmissions normalisées à haut débit sur une voie FDDI (Fiber Distributed Data Interface). Dans l'émetteur, un signal d'horloge de l'ordre de 25 MHz commande la division de chaque octet de données en deux groupes de quatre bits. Un surcodage transforme chaque groupe de quatre bits de données en un groupe de cinq bits ne contenant pas plus d'un nombre prédéterminé n de zéros consécutifs selon le code connu RLLn, trois en pratique dans le code RLL3. Le signal de transmission est fait de la mise en série de tous les groupes surcodés. Le surcodage est ainsi une forme d'incorporation d'une information d'horloge dans le signal de transmission en série des données. D'autre part, la correspondance biunivoque entre un groupe original et le groupe codé laisse de nombreux groupes codés sans correspondance, parmi lesquels l'un est choisi comme information de synchronisation. Cette information de synchronisation est aussi incorporée dans le signal de transmission en série. Une multiplication de la fréquence du signal d'horloge produit la fréquence de transmission. Grâce à un facteur de multiplication de 40, le débit de transmission peut atteindre 1Gbps. Le signal de transmission est codé en mode NRZI (Non Retour à Zéro Inversé). Dans ce mode, chaque "1" logique est traduit par un front de changement de niveau du signal codé, tandis qu'un "0" logique maintient le niveau du signal codé. Ce signal est transmis par une liaison de transmission à un récepteur. Dans le récepteur, on récupère d'abord l'information d'horloge contenue dans le signal de transmission reçu. La récupération est faite par analyse spectrale sélective de Fourier du signal numérique représentatif de chaque groupe codé. La fréquence du signal d'horloge restitué est multipliée pour reconstituer la fréquence du signal de transmission et décoder en conséquence les groupes reçus. En pratique, étant donné la présence aléatoire des fronts de données dans le signal de transmission, le circuit de récupération inclut un résonateur. En l'absence de fronts, le circuit de récupération se fixe sur l'harmonique du signal entrant dans la gamme du résonateur pour constituer un front apparent de référence. D'autre part, l'information de synchronisation est prélevée du signal de transmission reçu. Elle sert une seule fois pour cadrer les octets du signal de sortie du récepteur. Le dispositif d'échantillonnage des données utilise un circuit de calage du signal d'horloge par rapport à un front réel ou apparent du signal de transmission. Le calage se fait par un retard fixe égal à la demi-période R/2 du résonateur. Ceci n'est possible que dans une gamme limitée du résonateur. En outre, le calage devient très délicat et peu fiable pour les hauts débits de transmission.

En plus de ces difficultés, le système de transmission a plusieurs inconvénients majeurs. Le surcodage nécessaire pour effectuer l'analyse spectrale du signal transmis constitue une perte de débit de transmission des données. Dans le code RLL3 de surcodage d'un demi-octet en un groupe de cinq bits, le cas le plus favorable pour l'analyse spectrale correspond à un groupe ne contenant que des "1" logiques. Ainsi le signal de transmission présente un front pour chaque bit du groupe et a une composante fondamentale correspondant au double de la période de récurrence R des bits transmis. La composante d'horloge détectée par l'analyse spectrale sélective de Fourier du signal de transmission reçu est extraite par filtrage à la fréquence 1/R. Le cas le plus défavorable se présente en l'absence de front pendant trois périodes R successives. Dans ce cas, la fréquence de la composante fondamentale est 1/3R, la fréquence de second ordre est 2/3R et la composante de troisième ordre correspond à la composante fondamentale 1/R du cas précédent. Cependant, l'harmonique d'ordre trois a une amplitude nettement plus faible que la composante fondamentale. Il s'ensuit que le surcodage RLLn est limité à des faibles valeurs de n. Par exemple, une composante d'ordre 9 à filtrer serait très faible et serait très proche de ses composantes voisines de fréquences 8/9R et 10/9R. A cause de la faible amplitude et de la largeur de ces trois composantes, et surtout des dérives dans les caractéristiques électriques des composants, un tel filtrage s'avérerait impossible à réaliser actuellement. En conclusion, le surcodage qui s'impose en pratique est très contraignant et limite le débit de transmission des données.

Un autre inconvénient du procédé actuel réside dans l'insertion d'une information de synchronisation dans le signal de transmission. Cette information s'ajoute à l'information d'horloge introduite dans le signal de transmission sous la forme d'un surcodage des demi-octets de données. En outre, cette information consiste en un groupe codé ne correspondant pas à une donnée et ne servant qu'une seule fois. A cette occasion, une synchronisation faite dans de mauvaises conditions ne permet pas la restitution des données à la réception.

On connaît aussi dans la technique antérieure un dispositif d'échantillonnage tel que décrit dans le document FR-A-2313827 Ce dispositif s'applique à un signal de données en série dont les mots sont reçus à des instants quelconques et débutent chacun par un bit de synchronisation. Il utilise un générateur de signaux d'horloge déphasés et un sélecteur choisissant l'un de ces signaux pour l'échantillonnage du signal de données. Il s'ensuit que les instants d'échantillonnage ne peuvent pas être préréglés à une valeur donnée qui pourrait s'avérer la plus appropriée, surtout pour l'échantillonnage à très haut débit. De plus, ils ne peuvent pas être étendus au-delà d'une période de récurrence des données par rapport aux fronts de référence. Enfin, les bits de synchronisation qui produisent les fronts de référence au début de chaque mot s'ajoutent à l'horloge qui, dans ce document, est produite séparément dans l'émetteur et le récepteur.

L'invention surmonte les difficultés de conception et de réalisation des dispositifs d'échantillonnage antérieurs et remédie aux inconvénients des systèmes de transmission antérieurs.

Le but de l'invention est d'obtenir un calage automatique sur une position prédéterminée dans chaque période R. Un autre but est d'obtenir un calage automatique fiable, indépendant des dérives technologiques entre circuits intégrés différents et du débit des données.

Un procédé conforme à l'invention pour l'échantillonnage de données récurrentes à une période R dans un signal de données en série a les caractéristiques définies dans la revendication 1.

Il en résulte un dispositif d'échantillonnage tel que défini dans la revendication 7 et un système de transmission conforme à l'invention, tel que défini dans la revendication 17.

Les caractéristiques et avantages de l'invention ressortent clairement de la description qui suit, donnée à titre d'exemple et faite en référence aux dessins annexés.

Dans les dessins :
- la figure 1 illustre sous forme synoptique un système de transmission numérique auto-rythmé conforme à l'invention ;
- les figures 2A et 2B illustrent schématiquement la structure d'un sérialiseur-encodeur inclus dans l'émetteur du système de transmission représenté sur la figure 1 et mettant en oeuvre le procédé conforme à l'invention ;
- la figure 3 présente les formes d'onde des signaux d'horloge auxiliaire délivrés par le circuit représenté sur la figure 2A et illustre le fonctionnement du circuit représenté sur la figure 2B ;
- les figures 4A et 4B illustrent respectivement la structure générale d'un mot du signal de données et d'un mot du signal de transmission, tandis que les figures 4C et 4D d'une part, et 4E, 4F d'autre quart, illustrent respectivement deux exemples numériques relatifs aux deux mots précités ;
- la figure 5 illustre schématiquement le circuit électrique du récupérateur d'horloge conforme à l'invention, inclus dans le récepteur du système de transmission représenté sur la figure 1 ;
- la figure 6 illustre schématiquement le circuit électrique du désérialiseur-décodeur et du tampon de sortie inclus dans le récepteur du système de transmission représenté sur la figure 1 ;
- la figure 7 reproduit les figures 4B et 4F et illustre schématiquement le fonctionnement du désérialiseur-décodeur représenté sur la figure 6 ; et
- la figure 8 présente un chronogramme des signaux d'horloge auxiliaire récupérés et appliqués au 1 désérialiseur-décodeur et au tampon de sortie représentés sur la figure 6 pour en illustrer le fonctionnement.

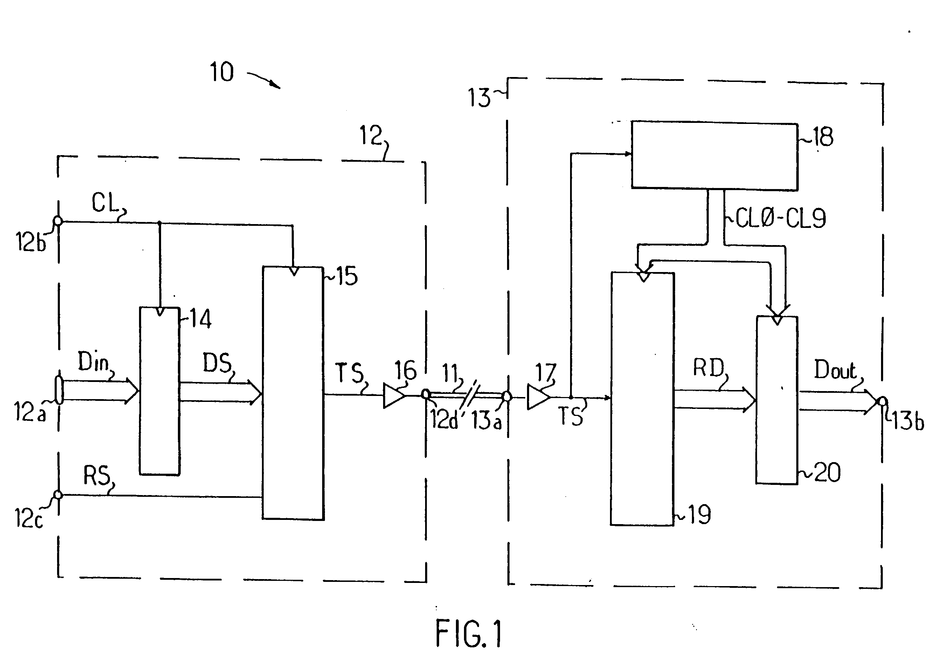

La figure 1 illustre le circuit électrique synoptique d'un système 10 de transmission numérique auto-rythmé conforme à l'invention. Le système 10 comprend une ligne de transmission 11, un émetteur 12 et un récepteur 13. L'émetteur 12 comprend : une borne d'entrée 12a recevant les données parallèles d'un signal d'entrée Din, une borne d'entrée d'horloge 12b recevant un signal d'horloge CL, une borne d'entrée 12c recevant un signal de remise à zéro RS et une borne de sortie 12d connectée à la ligne 11 ; un tampon d'entrée 14 recevant le signal d'entrée Din et piloté par le signal d'horloge CL pour fournir un signal de donnée parallèle DS ; un sérialiseur-encodeur 15 recevant le signal d'horloge CL, le signal de donnée parallèle DS et le signal de remise à zéro RS et délivrant un signal de transmission en série TS ; et un amplificateur de sortie 16 appliquant le signal de transmission TS sur la borne de sortie 12d de l'émetteur 12. Le récepteur 13 comprend : une borne d'entrée 13a connectée à la ligne 11 pour recevoir le signal de transmission TS et une borne de sortie 13b fournissant les données parallèles du signal de sortie Dout ; un amplificateur d'entrée 17 connecté à la borne d'entrée 13a et mettant en forme le signal de transmission TS reçu de la ligne 11 ; un récupérateur d'horloge 18 recevant le signal de transmission TS de l'amplificateur 17 pour restituer les signaux d'horloge auxiliaire CL0-CL9 ; un désérialiseur-décodeur 19 recevant le signal de transmission TS et les signaux d'horloge auxiliaire CL0-CL9 et produisant un signal de données parallèles restituées RD ; et un tampon de sortie 20 recevant le signal de données parallèles restituées RD et certains des signaux d'horloge auxiliaire CL0-CL9 et fournissant le signal de sortie de données Dout à la borne de sortie 13b du récepteur 13.

Dans le système 10, le signal d'entrée Din est un octet de bits de données associé au bit de parité. Ce groupe de neuf bits du signal d'entrée constitue un mot de données d'entrée. Le tampon d'entrée 14 est un élément classique, composé par exemple de neuf registres à front recevant respectivement les neuf bits parallèles du mot du signal d'entrée Din et commandés par le signal d'horloge CL. Les amplificateurs 16 et 17 peuvent aussi être des éléments classiques.

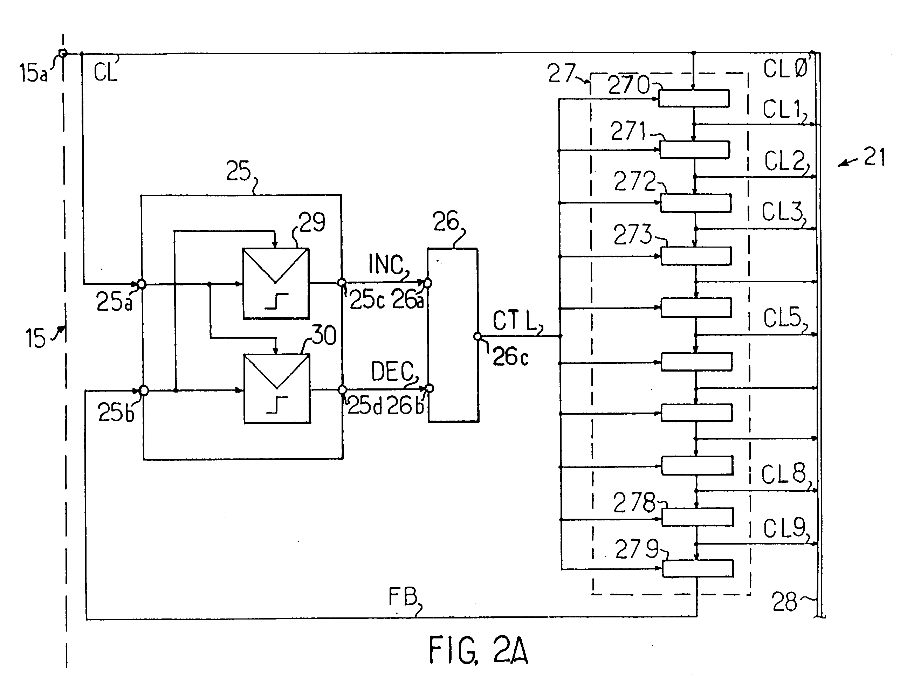

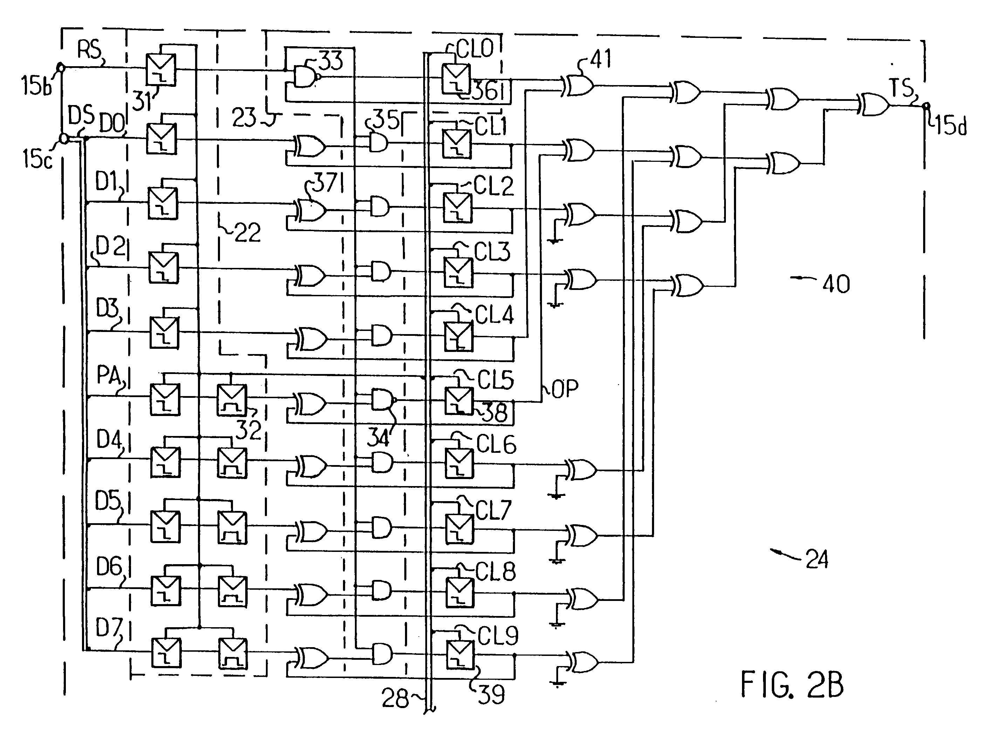

Les figures 2A et 2B illustrent schématiquement le circuit électrique du sérialiseur-encodeur 15. Le sérialiseur-encodeur 15 présente à la figure 2A une entrée 15a recevant le signal d'horloge CL et, à la figure 2B, une entrée 15b recevant le signal de remise à zéro RS, une entrée 15c recevant le signal d'entrée de données DS, et une sortie 15d délivrant le signal de transmission TS. Il se compose d'un générateur d'horloge auxiliaire 21 connecté à l'entrée 15a du sérialiseur-encodeur 15 et représenté sur la figure 2A, d'un bloc tampon 22, d'un générateur de synchronisation 23 et d'un bloc sérialiseur-encodeur 24 représentés sur la figure 2B.

Le générateur d'horloge auxiliaire 21 représenté sur la figure 2A constitue un circuit verrouillé en phase, tel que décrit dans la demande de brevet français de la demanderesse n° 90 01366 du 6 février 1990. Le générateur 21 comprend : la borne d'entrée 15a ; un comparateur de phase 25 ayant une première borne d'entrée 25a connectée à la borne d'entrée 15a, une seconde borne d'entrée 25b et deux bornes de sortie 25c, 25d ; un compteur-décompteur 26 ayant deux bornes d'entrée 26a, 26b connectées respectivement aux bornes de sortie 25c, 25d du comparateur de phase 25 et une borne de sortie 26c ; un circuit à retard de phase 27 composé de dix éléments de retard 270-279 connectés en série entre les deux bornes d'entrée 25a et 25b du comparateur de phase 25 et pourvus chacun d'une borne de commande connectée à la borne de sortie 26c du compteur-décompteur 26 ; et une sortie 28 constituant un bus d'horloge connecté aux bornes de sortie respectives des éléments de retard 270-279.

Le comparateur de phase 25 se compose de deux registres 29 et 30 sensibles aux fronts montants. Le registre 29 a son entrée de données connectée à la borne d'entrée 25a, son entrée d'horloge connectée à la borne d'entrée 25b, et sa sortie connectée à la borne de sortie 25c. Le registre 30 a, de façon similaire, son entrée de données connectée à la borne d'entrée 25b, son entrée d'horloge connectée à la borne d'entrée 25a et sa sortie connectée à la borne de sortie 25d.

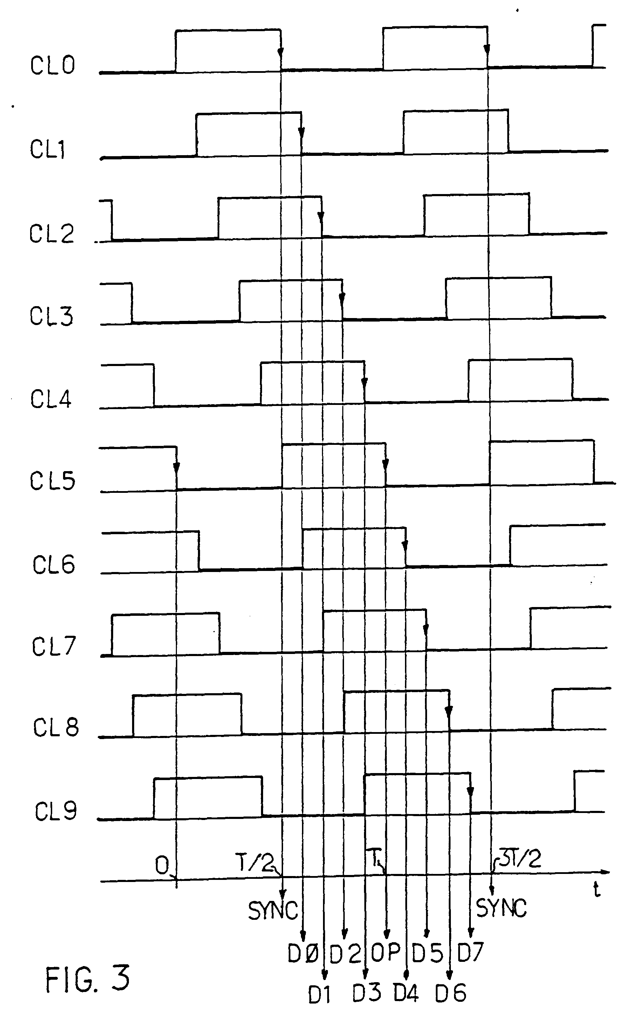

La figure 3 illustre les formes d'onde par rapport à l'axe des temps t des dix signaux d'entrée CL0-CL9 des éléments de retard respectifs 270-279 du circuit à retard de phase 27. Les signaux CL0-CL9 sont appliqués sur le bus d'horloge 28. Le signal CL0 correspond au signal d'horloge CL. Le signal d'horloge CL0 illustré est un signal carré de période T. Le signal de sortie du dernier élément de retard 279 constitue un signal de contre-réaction FB appliqué sur la borne de contre-réaction 25b du comparateur de phase 25. Le comparateur 25 compare donc la phase du signal de contre-réaction FB avec celle du signal d'horloge CL = CL0. Les deux bornes de sortie 25c et 25d du comparateur de phase 25 délivrent respectivement un signal d'incrémentation INC et un signal de décrémentation DEC. En réponse, le compteur-décompteur 12 fournit le signal de commande CTL appliqué sur les bornes de commande respectives des dix éléments de retard 270-279. Chaque élément de retard se compose, de manière classique, d'un nombre prédéterminé de cellules de retard élémentaire. Le signal de commande CTL représente une valeur numérique, qui est appliquée à chaque élément de retard pour en faire varier la durée du retard. La plage de variation possible de la durée du retard d'un élément de retard au cours d'une période T du signal d'horloge CL correspond à une fraction prédéterminée 1/P de l'étendue maximale de la variation de durée d'un élément de retard. En d'autres termes, il faut un nombre entier donné P de périodes T pour passer entre les deux valeurs extrêmes de l'étendue maximale de variation du retard d'un élément.

En fonctionnement, le signal d'horloge CL est retardé successivement par les dix éléments de retard 270-279. Les dix retards successifs produits par les éléments 270-279 sont égaux et divisent en principe la période T du signal d'horloge CL. S'il en est exactement ainsi en pratique, les signaux CL et FB entrant dans le comparateur de phase 25 et appliqués aux registres 29 et 30 ont la même phase et la même fréquence. Les signaux DEC et INC délivrés par les registres 29 et 30 ont donc la même valeur logique. Le compteur-décompteur 26 n'est donc pas activé et laisse le signal de commande CTL inchangé. Les dix signaux d'horloge CL0-CL9 sont correctement déphasés les uns par rapport aux autres d'une même valeur T/10. En pratique, on détermine une marge de tolérance m de déphasage entre le signal d'horloge CL et le signal de contre-réaction FB. Un déphasage dans la marge m laisse les signaux INC et DEC inchangés et n'est donc pas assimilé à un déphasage à corriger. La marge m peut être déterminée par les temps d'établissement des registres 29 et 30 et/ou par des retards relatifs entre les signaux d'entrée de données et d'entrée d'horloge de chaque registre, par exemple. La largeur de la marge m détermine la précision de la comparaison de phase effectuée par le comparateur 25. Elle est typiquement de l'ordre de 50 ps pour une période T = 5 ns du signal d'horloge CL.

Si le signal de contre-réaction FB est en avance de phase sur le signal d'horloge CL, le signal de décrémentation DEC a la valeur logique 0 et le signal d'incrémentation a la valeur 1. Le compteur-décompteur 26 est donc incrémenté pour que le signal de commande CTL augmente de manière égale les durées des retards produits par les éléments 270-279. Au contraire, si le signal de contre-réaction FB est en retard sur le signal d'entrée CL, le signal d'incrémentation INC a la valeur 0 et le signal de décrémentation DEC a la valeur 1. Le compteur-décompteur 26 est décrémenté pour que le signal de commande CTL diminue équitablement les durées des retards produits par les éléments 270-279. Par conséquent, un déphasage au-delà de la marge de tolérance m est corrigé au niveau de tous les éléments de retard 270-279 pour rétablir les déphasages désirés.

La commande de phase numérique mise en oeuvre dans le circuit verrouillé en phase constituant le générateur d'horloge auxiliaire 21 offre un avantage important. Si le signal d'horloge CL est interrompu, par principe le signal de contre-réaction FB est aussi interrompu. Les registres 29 et 30 du comparateur de phase 25 ne reçoivent plus de signal sur leur entrée d'horloge et conservent donc chacun le dernier état de la transmission. De même, le compteur-décompteur 26 conserve son dernier état et, par conséquent, l'état des éléments de retard 270-279. En d'autres termes, le générateur 21 conserve le dernier état de la transmission. Il s'ensuit que la réapparition du premier front du signal d'entrée CL produira immédiatement les signaux de sortie CL0-CL9 corrects si la fréquence du signal d'horloge CL n'a pas changé. Sinon, les retards sont réglés par le compteur-décompteur 26 dès le second cycle du signal d'horloge CL, en vue de produire les signaux de sortie CL0-CL9 désirés. En conclusion, la durée d'établissement du fonctionnement correct du générateur 21 peut être nulle, ou au pire égale au nombre P précité de périodes T du signal d'horloge pour passer entre les deux valeurs extrêmes de l'étendue de variation de la durée de chaque élément de retard. Par conséquent, la mise en marche du générateur 21 ou le réveil d'une ligne de transmission se font très brièvement.

Un second avantage réside dans la large bande de fréquences de fonctionnement du générateur d'horloge auxiliaire 21 . La largeur de la bande dépend essentiellement de la gamme de retards variables de chaque élément de retard 270-279, comme cela ressortira ultérieurement.

Comme autre avantage, le signal d'horloge CL et le signal de contre-réaction FB qui sont comparés par le comparateur de phase 25 ont par principe la même fréquence. La structure du comparateur 25 peut être très simple, comme celle illustrée. En outre, le comparateur peut s'accommoder à une grande bande de fréquences de fonctionnement. En résumé, le générateur d'horloge auxiliaire 21 résout tous les problèmes que posent l'emploi d'un circuit verrouillé en phase classique appelé couramment PLL (Phase Locked Loop). Un autre avantage offert par le générateur 21 réside dans son adaptation aux diverses formes du signal d'horloge CL. Dans l'exemple illustré, le rapport cyclique du signal d'horloge peut être quelconque.

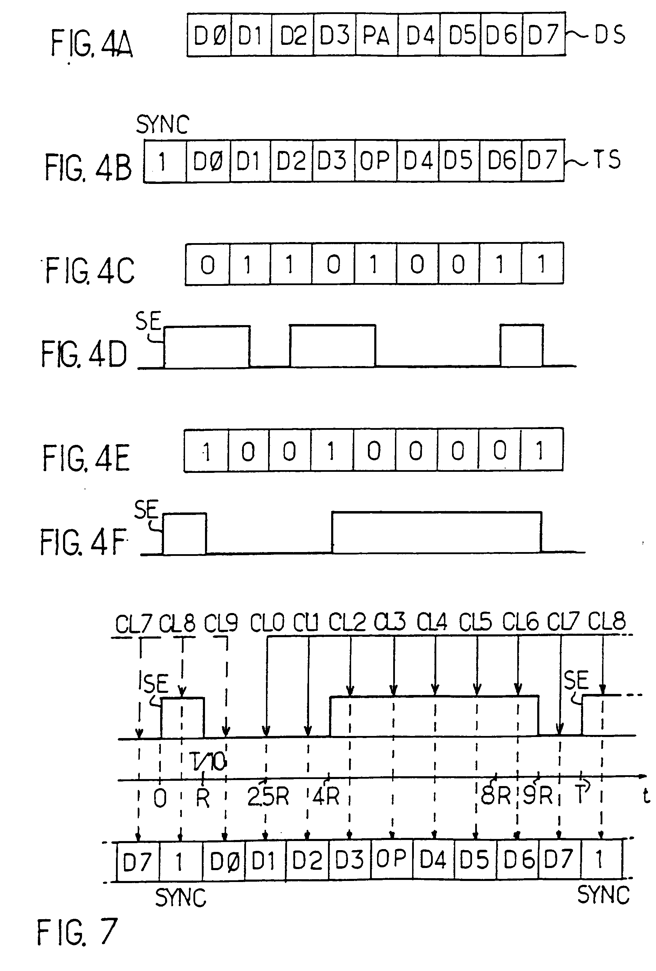

Dans la figure 2B, le bloc tampon 22 du sérialiseur-encodeur 15 est connecté à la borne d'entrée 15b recevant le signal de remise à zéro RS, à la borne d'entrée 15c recevant le signal d'entrée parallèle DS et au bus d'horloge 28 du générateur 21 représenté sur la figure 2A. A titre d'exemple, la figure 4A présente la structure d'un mot du signal d'entrée de données DS appliqué sur la borne 15c du sérialiseur-encodeur 15. Le mot se compose de huit bits de données D0-D7 et d'un bit de parité PA placé entre les bits de données médians D3 et D4. Le bloc tampon 22 se compose de dix registres 31 sensibles aux fronts descendants et de cinq registres de niveau 32, ayant chacun une entrée de données, une entrée d'horloge et une sortie. Tous les registres 31 et 32 ont leur entrée d'horloge recevant le signal d'horloge CL5 du bus d'horloge 28 du générateur d'horloge auxiliaire 21. Les dix registres 31 ont leurs entrées de données recevant respectivement le signal de remise à zéro RS, les quatre premiers bits de données D0-D3, le bit de parité PA et les quatre derniers bits de données D4-D7 du signal d'entrée DS. Les sorties des registres 31 relatifs au bit de parité PA et aux quatre derniers bits de données D4-D7 sont appliquées sur les entrées de signal respectives des registres de niveau 32.

Le générateur de synchronisation 23 inclut deux portes NAND 33, 34 à deux entrées et huit portes AND 35 à deux entrées. Les premières entrées des portes 33, 34 et 35 sont connectées à la sortie du registre 31 relatif au signal de remise à zéro RS. Le générateur 23 comprend en outre un registre à front descendant 36 ayant son entrée d'horloge recevant le signal d'horloge CL0 du bus d'horloge 28, son entrée de données connectée à la sortie de la porte NAND 33 et sa sortie appliquée sur la seconde entrée de la porte NAND 33.

Le bloc sérialiseur-encodeur 24 inclut neuf portes OU Exclusif à deux entrées 37, dont les premières entrées sont connectées aux sorties correspondantes des quatre registres 31 relatifs aux quatre premiers bits de données D0-D3, ainsi qu'aux sorties respectives des cinq registres 32. Les sorties des portes 37 relatives aux bits de données D0-D7 sont respectivement connectées aux secondes entrées des portes AND 35, et la sortie de la porte 37 relative au bit de parité PA est connectée à la seconde entrée de la porte NAND 34. Le bloc sérialiseur-encodeur 24 comporte un registre de parité à front descendant 38 ayant son entrée de données connectée à la sortie de la porte NAND 34 et huit registres de données à front descendant 39 ayant leurs entrées de données respectives connectées aux sorties des portes AND 35. Le registre de parité 38 est commandé par le signal d'horloge CL5 et les huit registres de données 39 sont commandés par les signaux d'horloge CL1-CL9 du bus 28. Les sorties respectives des registres 38 et 39 sont appliquées sur les secondes entrées des portes OU Exclusif 37 correspondantes. Enfin le bloc sérialiseur-encodeur 24 comprend un additionneur logique 40 consistant en un arbre à quatre étages de portes OU Exclusif 41 à deux entrées. Les deux entrées de la première porte 41 du premier étage reçoivent les signaux de sortie respectifs du registre de synchronisation 36 et du registre 39 de la donnée D3. La seconde porte 41 du premier étage reçoit les signaux de sortie respectifs du registre de parité 38 et du registre 39 de donnée D0. Les six autres portes 41 du premier étage ont leurs premières entrées connectées aux sorties des registres 39 des données D1, D2, D4, D5, D6 et D7 et leurs secondes entrées mises à la masse. Les sorties respectives des portes 41 du premier étage relatives au bit de synchronisation et aux bits de données D0-D2 d'une part, et celles relatives aux bits de données D7, D6, D5 et D4 d'autre part, alimentent respectivement les deux entrées des quatre portes 41 du second étage de l'additionneur 40. Les sorties des première et troisième portes 41 du second étage et celles des deux autres portes 41 alimentent respectivement les deux portes 41 du troisième étage, qui alimentent elles-mêmes la porte 41 du dernier étage. La sortie de cette porte délivre le signal de transmission TS à la borne de sortie 15d du sérialiseur-encodeur 15.

Le fonctionnement du sérialiseur-encodeur 15 va maintenant être décrit en référence aux figures 2B, 3 et 4A-4F. Avant l'initialisation du système 10, le signal de remise à zéro RS appliqué sur l'entrée 15b a l'état logique 0, de sorte que les sorties des portes 33, 34 et 35 sont toutes inactivées. Elles sont activées lors de l'initialisation par la mise au niveau logique 1 du signal de remise à zéro RS. On suppose que signal d'horloge CL est appliqué sur l'entrée 15a et que le bus d'horloge 28 fournit les dix signaux d'horloge auxiliaire CL0-CL9 représentés sur la figure 3. Les registres 31 sont commandés à l'instant t = 0 par le front descendant du signal d'horloge CL5 en opposition de phase avec le signal d'horloge CL0. Le signal de remise à zéro RS et les neuf bits du signal d'entrée de données DS représenté sur la figure 4A sont entrés dans les registres 31 respectifs. Dans le générateur de signaux de synchronisation 23, l'état logique 1 de sortie de la porte 33 est mémorisé dans le registre 36 commandé par le front descendant du signal d'horloge CL0. Etant donné que le fonctionnement du système 10 est régi par l'état logique 1 du signal RS, la porte 36 change d'état à chaque front descendant du signal d'horloge CL0.

Les bits de données D0-D3 mémorisés dans les registres 31 respectifs sont transmis aux portes 37 correspondantes. Chaque porte 37 forme avec le registre 39 une cellule élémentaire d'encodage de type NRZI. On a vu que la porte 35 est simplement un élément d'activation du fonctionnement de la cellule. Si par exemple le bit de donnée D0 a l'état logique 1, le front descendant du signal d'horloge CL1 va faire changer l'état logique de sortie du registre 39. Au contraire, si D0 a l'état logique 0, l'état logique du signal de sortie du registre 39 est inchangé par le passage du front descendant du signal d'horloge CL1. La figure 3 illustre la succession des encodages des bits de données D0-D3 correspondant à leur sérialisation au rythme R de T/10.

Cependant, il ressort de la figure 3 que l'encodage du bit de parité PA se produit à l'instant t = T où les registres 31 sont commandés pour mémoriser les bits du mot suivant du signal d'entrée de données DS. Les registres 32 évitent la perte du bit de parité PA et des bits de données D4-D7 du premier mot. Par conséquent, la sérialisation se poursuit par l'encodage du bit de parité PA inversé par la porte NAND 34 pour constituer un bit d'anti-parité OP, puis par l'encodage des bits de données D4-D7. L'encodage et la sérialisation des bits de synchronisation et des données du mot suivant enregistré à l'instant t = 3T/2 se poursuit de la manière qui vient d'être décrite.

Les signaux fournis successivement par les cellules d'encodage sont ajoutés dans l'additionneur 40 pour former le signal de transmission en série TS et l'appliquer à la sortie 15d du sérialiseur-encodeur 15. L'additionneur 40 constitue avec le circuit verrouillé en phase du générateur d'horloge auxiliaire 21 un multiplieur de fréquence d'un facteur égal au nombre de décalages du signal d'horloge CL dans une période, dix dans l'exemple illustré. On trouvera une description plus détaillée d'un tel multiplieur de fréquence dans la demande de brevet français précitée de la demanderesse.

L'invention tire profit de la réalisation en circuits intégrés de l'additionneur logique 40. L'uniformité des caractéristiques des transistors sur un même circuit intégré permet d'égaliser les temps de propagation entre les sorties des signaux d'horloge CL0-CL9 et la sortie 15d de l'additionneur. Ceci assure la formation d'une fréquence multiple de grande qualité.

Le multiplieur de fréquence qui vient d'être décrit profite de tous les avantages du circuit verrouillé en phase 21 et de ceux d'un additionneur logique. On citera notamment la simplicité, la fiabilité et l'adaptation à une large bande de fréquences de fonctionnement. Par exemple, avec un signal d'horloge CL de période T variant entre 5 ns et 10 ns et avec le circuit à retard 27 de dix éléments de retard pouvant produire chacun un retard variant de 500 à 1000 ps, il est possible d'obtenir à la sortie 15d du sérialiseur-encodeur 15 un débit compris entre 1 et 2Gbps.

La figure 4B présente la structure d'un mot du signal de transmission en série TS. Chaque mot du signal TS comprend le mot de données du signal DS, précédé du bit de synchronisation SYNC toujours égal à 1. La figure 4C donne un exemple illustratif d'un mot du signal de données DS, dans lequel le nombre de bits de données de valeur logique 1 est pair et le bit d'antiparité OP a donc la valeur logique 1. Ce mot produit la forme d'onde du signal de transmission TS illustré dans la figure 4D se rapportant à la figure 4B. On remarquera que le bit de synchronisation SYNC se traduit par un front montant constituant un front de synchronisation SE dans le signal de transmission TS. La figure 4E présente le cas d'un mot du signal d'entrée de données DS, dans lequel le bit d'antiparité OP a la valeur logique 0 correspondant à un nombre impair de bits de données de valeur logique 1. Il ressort de la figure 4F en référence à la figure 4B que le bit de synchronisation SYNC se traduit encore par un front montant constituant le front de synchronisation SE dans le signal de transmission TS. En résumé, l'addition d'un bit de synchronisation SYNC de valeur logique 1 à chaque mot de données incorporant un bit d'antiparité OP se traduit par un même front de synchronisation SE dans le signal de transmission TS, un front montant dans l'exemple de réalisation illustré.

Dans le récepteur 13 du système 10 conforme à l'invention, le signal de transmission TS reçu sur l'entrée 13a est remis en forme et amplifié dans l'amplificateur 17, puis il est appliqué au récupérateur d'horloge 18 et au désérialiseur-décodeur 19.

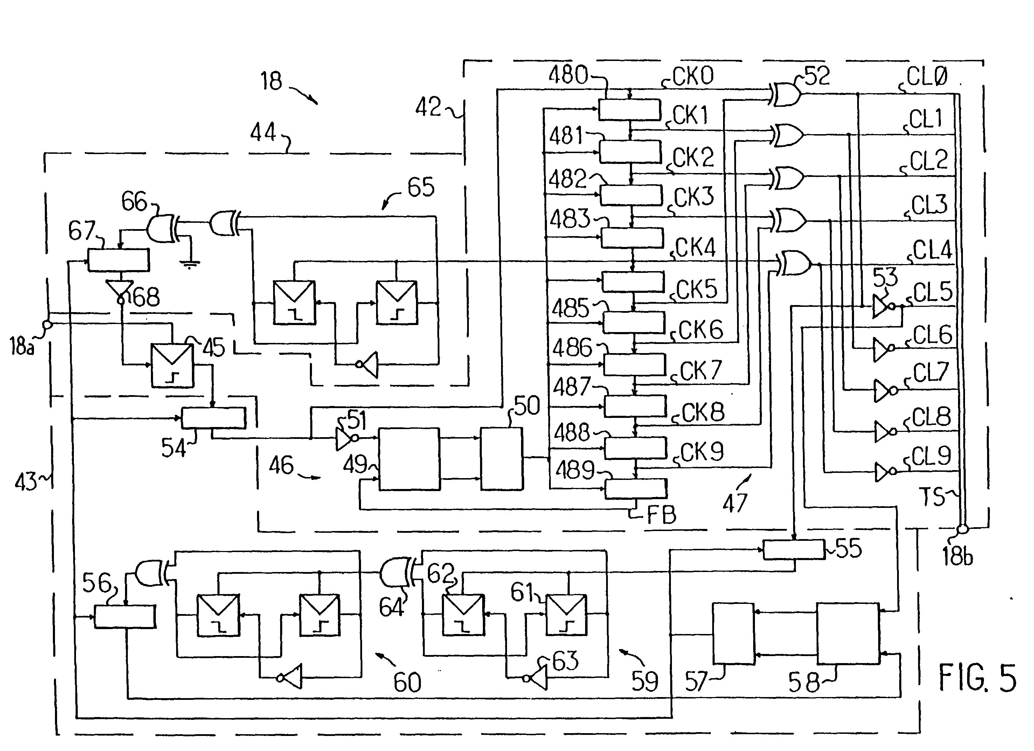

La figure 5 illustre schématiquement le circuit électrique du récupérateur d'horloge 18. Il présente une entrée 18a pour le signal de transmission TS et un bus de sortie 18b des dix signaux d'horloge auxiliaire CL0-CL9 récupérés dans le signal de transmission TS. Il comprend un circuit de récupération d'horloge 42, un circuit de calage d'horloge 43, et un circuit de validation 44.

Le circuit de récupération d'horloge 42 comprend un registre d'entrée 45 à front montant, un circuit verrouillé en phase 46 similaire au générateur d'horloge auxiliaire 21 décrit en référence à la figure 2A, et un additionneur logique 47. Le registre d'entrée 45 reçoit sur son entrée d'horloge le signal de transmission TS. Sa sortie est reliée à l'entrée du circuit verrouillé en phase 46 formé de dix éléments de retard 480-489 en série, d'un comparateur de phase 49, d'un compteur-décompteur 50, tous de structure identique à ceux du circuit 21, et d'un inverseur 51. Les dix signaux d'entrée des éléments de retard respectifs 480-489 constituent des signaux d'horloge intermédiaires CK0-CK9, tandis que le signal de contre-réaction FB issu du dernier élément de retard 489 est appliqué sur l'entrée de contre-réaction du comparateur de phase 49. L'autre entrée du comparateur de phase 49 reçoit par l'intermédiaire de l'inverseur 51 le signal de sortie du registre 45. Les éléments de retard 480-489 sont commandés par le signal de sortie du compteur-décompteur 50 en fonction des signaux d'incrémentation et de décrémentation fournis par le comparateur de phase 49. On verra par la suite que les signaux d'horloge intermédiaires CK0-CK9 ont une fréquence moitié de celle des signaux d'horloge CL0-CL9. L'additionneur logique 47 forme avec le circuit verrouillé en phase 46 un multiplieur de fréquence par deux pour fournir les signaux d'horloge CL0-CL9 sur le bus de sortie 18b du récupérateur d'horloge 18. L'additionneur 47 comprend cinq portes OU Exclusif 52 à deux entrées et cinq inverseurs 53. Les portes 52 ont leurs premières entrées respectives recevant les signaux d'horloge intermédiaires CK0-CK4, leurs secondes entrées respectives recevant les autres signaux CK5-CK9, et leurs sorties respectives délivrant les signaux d'horloge CL0-CL4. Ces cinq signaux d'horloge sont inversés par les cinq inverseurs 53 respectifs pour fournir les cinq autres signaux d'horloge CL5-CL9.

Le circuit de calage d'horloge 43 comprend un premier élément de retard 54 recevant le signal de sortie du registre d'entrée 45 et alimentant l'entrée de l'inverseur 51 et l'entrée du circuit verrouillé en phase 46 qui correspond au signal d'horloge intermédiaire CKO, un second élément de retard 55 recevant le signal d'horloge intermédiaire CKO et un troisième élément de retard 56. Ces trois éléments de retard ont une structure similaire à celle des éléments de retard 480-489. Leur retard est commandé par le signal de sortie d'un compteur-décompteur 57 en réponse aux signaux d'incrémentation et de décrémentation fournis par un comparateur de phase 58. Le comparateur 58 reçoit le signal d'horloge CL5 et le signal de sortie du troisième élément de retard 56 comme signal de contre-réaction. Le second élément de retard 55 reçoit le signal d'horloge CLO et fournit un signal de sortie à l'entrée d'une première cellule de retard 59 montée en série avec une seconde cellule de retard identique 60 fournissant le signal d'entrée du troisième élément de retard 56. Chaque cellule de retard 59, 60 se compose d'un registre à front montant 61, d'un registre à front descendant 62, d'un inverseur 63 et d'une porte OU Exclusif de sortie 64 à deux entrées. Le signal de sortie de l'élément de retard 55 est appliqué sur les entrées d'horloge respectives des registres 61 et 62. La sortie du registre 62 est connectée à l'entrée de données du registre 61, dont la sortie est reliée par l'intermédiaire de l'inverseur 63 à l'entrée de données du registre 62. Les signaux de sortie respectifs des registres 61 et 62 sont appliqués aux deux entrées de la porte 64.

Le circuit de validation 44 valide le registre d'entrée 45 du circuit de récupération d'horloge. Il est commandé par le signal d'horloge intermédiaire CK4 et fournit le signal de données du registre d'entrée 45. Il comprend une cellule de retard 65 similaire aux cellules 59 et 60, une porte OU Exclusif 66, un élément de retard 67 et un inverseur 68. Dans la cellule 65, les entrées d'horloge respectives des registres 61 et 62 reçoivent le signal d'horloge intermédiaire CK4 et la porte de sortie 64 délivre un signal appliqué sur une entrée de la porte 66. Cette porte a son autre entrée mise à la masse et sa sortie fournit le signal d'entrée à l'élément de retard 67. L'élément de retard 67 est similaire aux autres et est commandé par le signal de sortie du compteur-décompteur 57 du circuit de calage d'horloge 43 pour fournir le signal de données du registre d'entrée 45 par l'intermédiaire de l'inverseur 68.

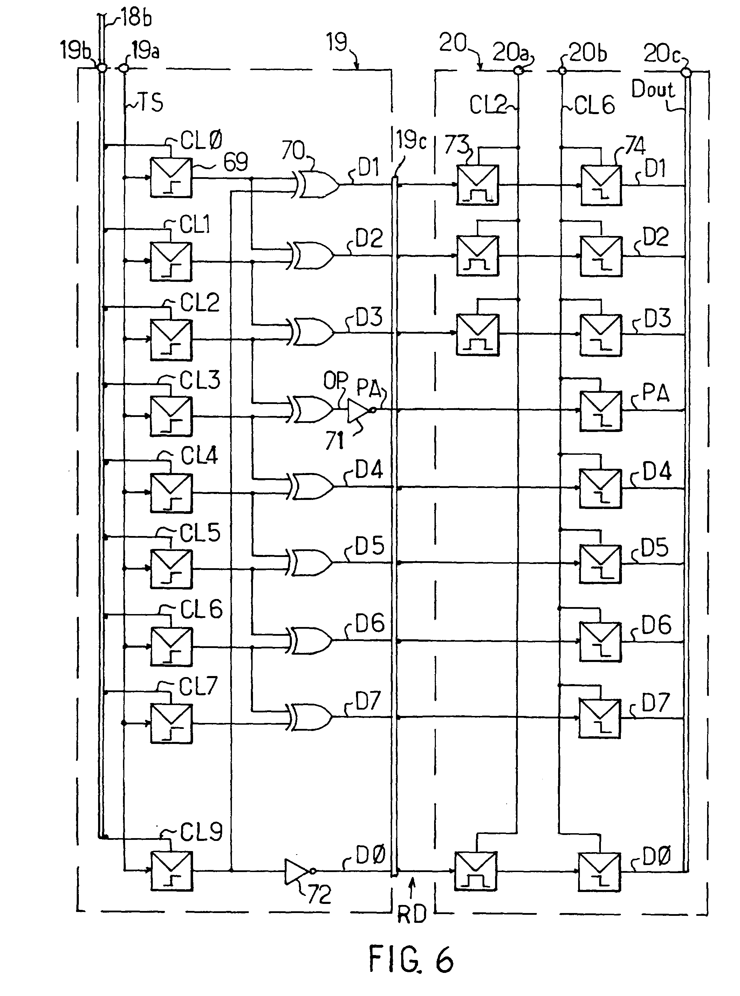

Le désérialiseur-décodeur 19 va maintenant être décrit en référence à la figure 6. Il présente une entrée 19a recevant le signal de transmission TS de l'amplificateur 17, une entrée d'horloge 19b connectée au bus d'horloge 18b issu du récupérateur d'horloge 18, et un bus de sortie 19c fournissant le signal de données récupérées RD. Le désérialiseur-décodeur 19 comprend : un circuit d'échantillonnage composé de neuf registres d'entrée à front montant 69 commandés respectivement par les neuf signaux d'horloge CL0-CL7 et CL9 prélevés du bus 18b et recevant tous le signal de transmission TS ; et un circuit de sortie composé de huit portes OU Exclusif 70 à deux entrées et de deux inverseurs 71, 72. Les deux entrées de chaque porte 70 reçoivent respectivement le signal de sortie du registre 69 correspondant et le signal de sortie du registre 69 précédent. Ainsi, par exemple, la première porte 70 placée en haut de la figure reçoit les signaux de sortie des registres 69 commandés par les signaux d'horloge CL0 et CL9, la seconde porte 70 reçoit ceux des registres 69 commandés par les signaux d'horloge CL1 et CL0,..., et la huitième porte 70 reçoit ceux des registres 69 commandés par les signaux d'horloge CL7 et CL6. La sortie de la quatrième porte 70 est connectée à l'inverseur 71 et celle du registre 69 commandé par le signal d'horloge CL9 est connectée à l'inverseur 72. Les sorties respectives de la première à la dernière porte 70 fournissent les bits de données D1, D2, D3, OP, D4, D5, D6, D7 et la sortie de l'inverseur 72 fournit le bit de donnée D0. Le bit d'antiparité OP est inversé pour constituer le bit de parité PA. Les bits de données et de parité sont appliqués sur le bus de sortie 19c.

La figure 6 illustre aussi schématiquement le circuit électrique du tampon de sortie 20 représenté sur la figure 1. Le tampon de sortie 20 a une entrée de signal connectée au bus 19c, deux entrées d'horloge 20a et 20b recevant respectivement les signaux d'horloge CL2 et CL6, et un bus de sortie 20c délivrant le signal de sortie Dout du récepteur 13 du système 10 conforme à l'invention. Le tampon 20 comprend quatre registres à niveau 73 et neuf registres de sortie à front descendant 74. Les registres à niveau 73 sont commandés par le signal d'horloge CL2 et ont leurs entrées de données recevant respectivement les bits D1-D3 et D0 du bus d'entrée 19c. Les registres de sortie 74 sont commandés par le signal d'horloge CL6. Quatre des registres 74 ont leurs entrées de données respectives connectées aux sorties des quatre registres à niveau 73. Les autres registres 74 ont leurs entrées respectives recevant le bit de parité PA et les bits de données D4-D7 du bus 19c. Les sorties respectives de tous les registres 74 délivrent dans l'ordre indiqué dans la figure 4A les bits de données D0-D7 et le bit de parité PA pour restituer un signal de sortie Dout identique au signal d'entrée DS de l'émetteur 12.

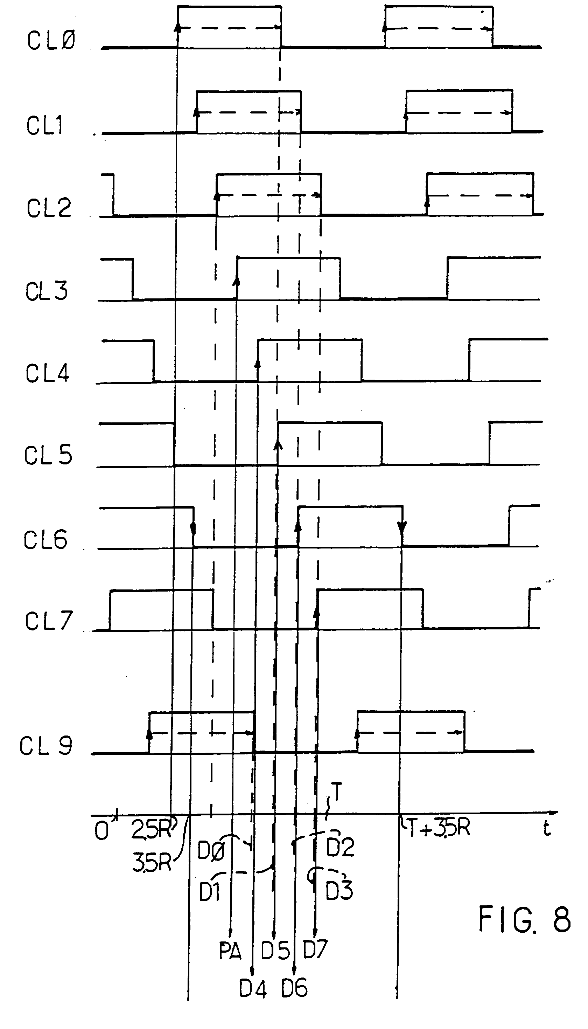

La figure 7 reprend l'exemple de la figure 4E en référence à l'axe des temps t et, pour commodité de lecture, la figure 4B, et illustre schématiquement le fonctionnement du récupérateur d'horloge 18 représenté sur la figure 5. Dans le récupérateur 18, le signal TS est appliqué sur l'entrée d'horloge du registre à front montant 45. Ce registre est supposé validé par le circuit de validation 44 pour être commandé au passage à l'instant t = 0 d'un front de synchronisation SE. Juste après l'instant t = 0 le registre 45 est commandé par le circuit de validation 44 de façon à ne pas réagir aux fronts correspondant aux bits de données et d'antiparité suivants et à ne réagir qu'au prochain front de synchronisation SE à l'instant t = T. La fréquence du signal d'horloge formé par les fronts de synchronisation SE détectés par le registre 45 est donc 1/2T. En d'autres termes, le registre 45 fournit un signal d'horloge intermédiaire CL0 ayant une fréquence moitié de celle du signal d'horloge CL0 émis. Dans le circuit verrouillé en phase 46, les dix éléments de retard 480-489 produisent successivement dix retards identiques partageant la demi-période T du signal d'horloge CK0 et délivrent les dix signaux d'horloge intermédiaires CK0-CK9 et le signal de contre-réaction FB. A cause de la période 2T du signal CK0, celui-ci est en opposition de phase avec le signal de contre-réaction FB et traverse donc l'inverseur 51 pour que ces deux signaux soient en phase aux entrées respectives du comparateur 49. Pour la même raison, l'additionneur logique 47 forme avec le circuit 46 un multiplieur de fréquence par deux afin de délivrer les dix signaux d'horloge CL0-CL9 successivement et uniformément retardés entre eux dans la période T comme ceux générés à l'émission. Dans l'exemple illustré, le front de synchronisation SE détecté par le registre 45 subit un premier retard Θ1 en traversant ce registre et un second retard Θ2 dans l'élément de retard 54 pour constituer un front du signal d'horloge intermédiaire CK0. Ce dernier front subit un troisième retard Θ3 dans la porte 52 pour devenir un front du signal d'horloge auxiliaire CL0.

Il ressort des figures 4D, 4F et 7 que le dernier front montant possible dans le signal TS correspond au bit de données D6 à l'instant t = 8T/10. Après cet instant, le circuit de validation 44 peut valider l'entrée de signal du registre 45 pour détecter le front montant suivant de synchronisation SE à l'instant t = T. Dans l'exemple illustré, la validation du registre 45 est faite à l'instant t = 9T/10, déterminé par l'accumulation des retards suivants du front de synchronisation à partir de l'instant t = 0. Ce front subit d'abord les retards Θ1 et Θ2 pour constituer un front du signal CK0. En désignant par Θ4 la durée d'un retard de chaque élément 480-489, le retard du signal CL4 par rapport au signal CL0 est de 4Θ4. Le signal CK4 est choisi comme signal d'entrée du circuit de validation 44. Dans le circuit 44, le signal CK4 traverse, dans la cellule de retard 65, l'un des registres 61 et 62 selon que son front est montant ou descendant et la porte 64, puis la porte OU Exclusif 66, l'élément de retard 67 et l'inverseur 68. En pratique, on supposera que tous les registres présentent des retards identiques Θ1 et toutes les portes OU Exclusif présentent des retards identiques Θ3, que les inverseurs ne retardent pas les signaux, et que les retards Θ2 sont identiques pour les éléments de retard 54 et 67. Les retards cumulés à partir du registre 45 font 9T/10. En d'autres termes, Θ1 + Θ2 + 4 Θ4 + Θ1 + 2 Θ3 + Θ2 = 2 Θ1 + 2 Θ2 + 2 Θ3 + 4 Θ4 = 9T/10. A ce point de la description, tous les retards dans cette formule sont connus, à l'exception de Θ2 qui va maintenant ressortir de la description du fonctionnement du circuit de calage d'horloge 43 du récupérateur d'horloge 18.

Le circuit 43 synchronise le calage des signaux d'horloge CL0-CL9 à mi-largeur des bits respectifs du signal de transmission TS, à partir de chaque front de synchronisation SE détecté par le registre 45. La mi-largeur R/2 (0,5T/10) du signal représentatif d'un bit correspond en pratique à la plage de stabilité maximale du signal et optimise ainsi la détermination de la valeur logique de chaque bit. Dans l'exemple illustré dans la figure 7, le signal CLO est calé à 2,5T/10, de sorte que Θ1 + Θ2 + Θ3 = 2,5T/10. Le retard apporté par l'élément 54 est donc Θ2 = 2,5T/10 - Θ1 - Θ3. La synchronisation du calage du signal d'horloge CL0 est faite par le comparateur de phase 54, qui compare la phase du signal d'horloge CL5 avec celle du signal d'horloge en opposition de phase CL0 retardé successivement dans l'élément de retard 55, les cellules de retard 59 et 60, et dans l'élément de retard 56. Le retard total est donc Θ2 + Θ1 + Θ3 + Θ1 + Θ3 + Θ2 = 2 (Θ1 + Θ2 + Θ3) et doit vérifier l'équation : 2 (Θ1 + Θ2 + Θ3) = 5T/10. Le compteur-décompteur 57 règle la durée de Θ2 dans les éléments 54, 55, 56 et 67 pour satisfaire cette équation. Le calage des signaux d'horloge CL0-CL9 est donc réglé sur des retards respectifs 2,5R - 11,5R déterminés par rapport à un front de synchronisation SE de façon que chaque signal d'horloge corresponde à la plage de stabilité maximale du signal représentatif de chaque bit. De plus, le circuit de calage d'horloge règle le retard de 9R du signal de validation du registre 45 par rapport à chaque front de synchronisation SE détecté par ce registre.

Les figures 7 et 8 illustrent le fonctionnement du désérialiseur-décodeur 19 représenté sur la figure 6. La figure 8 présente les dix signaux d'horloge récupérés CL0-CL9 en référence à l'axe des temps indiqué sur la figure 7 et illustre la récupération des bits de données respectifs en correspondance avec les fronts montants des signaux d'horloge. Dans le désérialiseur-décodeur 19 le signal d'horloge CL8 n'est pas utilisé puisqu'il récupérerait le bit de synchronisation SYNC toujours égal à 1 et inutile dans le signal de données à restituer. Il ressort des figures 6, 7 et 8 que les signaux d'horloge CL0-CL7 et CL9 récupèrent respectivement les bits de données D1-D3, le bit d'antiparité OP et les bits de données D4-D7 et D0. Si pour le mot précédent le signal d'horloge CL9 tracé en tireté dans les figures 7 et 8 échantillonne une valeur logique 0, cette valeur correspond à un front équivalant à un bit de donnée D0 de valeur logique 1. L'inverseur 72 suffit donc pour déterminer la valeur du bit D0. Les autres bits se déterminent en conséquence par les portes OU Exclusif 70 réagissant à la présence d'un front échantillonné par les registres 69 correspondants. Le bit d'antiparité OP ainsi récupéré est inversé en 71 pour restituer le signal de parité PA. Etant donné que le bit D0 est déterminé par le signal d'horloge CL9 du mot précédent, tous les bits du signal de données RD sont à remettre en ordre pour constituer un signal de données identique à celui émis.

La remise en ordre des bits du signal restitué RD est faite dans le tampon de sortie 20 représenté sur la figure 6, de la manière illustrée dans la figure 8. La remise en ordre commence par l'action du signal d'horloge CL2 sur les registres 73. Quand les bits de données D0-D3 sortent du désérialiseur-décodeur 19, le signal CL2 a l'état logique 0 et bloque les registres à niveau 73. A l'instant t = 4,5T/10, le signal d'horloge CL2 prend l'état logique 1 et commande la mémorisation des bits de données D0-D3 dans les registres 73. Pendant ce temps sortent les bits PA et D4-D7. Dans ces conditions, tous les bits D0-D3, PA, D4-D7 du même mot sont présents sur les entrées respectives des registres 74. A l'instant t = T + 3,5T/10, les registres 74 mémorisent ce mot. On notera que les bits de données D0-D3 suivants sont alors déjà échantillonnés mais attendent à l'entrée du tampon de sortie 20 le signal d'horloge CL2 suivant pour entrer. En résumé, le dispositif conforme à l'invention pour l'échantillonnage de données récurrentes à une période R dans le signal de transmission TS présente les caractéristiques et avantages suivants. Il comprend un circuit de calage 43 des dix signaux d'horloge CL0-CL9 par rapport à un front de synchronisation SE du signal de transmission. Ce front est récurrent à la période 10R = T dans le signal de transmission. Le circuit de calage 43 règle le retard entre chacun des signaux d'horloge et chaque front de synchonisation SE. Il attribue une valeur différente de retard pour les dix signaux d'horloge. Le retard du signal CL0 est de 2,5R. Les retards des signaux suivants CL1-CL9 sont sucessivement plus longs d'une période R. En d'autres termes, le retard du signal CL0 est égal à la somme de deux périodes R et de la demi-période R/2 correspondant à la zone de stabilité maximale du signal de données dans la période R. Plus généralement, le retard de chacun des signaux d'horloge CL0-CL9 est égal à un nombre entier respectif n CL0-CL9 est égal à un nombre entier respectif n compris entre 2 et 11 de périodes R, ajouté à la demi-période R. Chaque retard est ajusté à sa valeur correspondante (n + 0,5) R par le circuit verrouillé en phase 58 et les éléments de retard 54, 55 et 56. Il est à noter que le retard minimal de 2,5R du signal CL0 a été choisi en raison des hauts débits prévus. Aux hauts débits, les temps de transit fixes et nécessaires Θ1 et Θ3 des signaux dans les composants sont proches de R/2 et peuvent dépasser cette valeur. Un retard de 2,5R offre l'avantage de tenir compte de ces temps de transit et de pouvoir ajouter et ajuster simplement les retards variables Θ2. Il s'ensuit que le dispositif d'échantillonnage conforme à l'invention s'adapte à toute variation ou changement de fréquence de fonctionnement et maîtrise tout retard indépendamment du débit et des dérives technologiques des caractéristiques des composants entre plaquettes semiconductrices différentes. L'invention tire aussi judicieusement profit de la réalisation en circuits intégrés de l'émetteur et du récepteur du système de transmission. L'uniformité des caractéristiques des transistors sur un même circuit intégré permet d'avoir simplement des retards identiques Θ1, Θ2, Θ3 et Θ4 et d'égaliser les temps de propagation des signaux, notamment ceux dans le circuit de calage d'horloge 43.

De nombreuses variantes peuvent être apportées à l'exemple de réalisation illustré. Par exemple, le nombre n peut être nul et déterminer un retard classique de R/2. Ceci est d'autant plus facile que les débits sont faibles. De même, l'invention permet d'ajuster le calage dans chaque période sur une valeur *α* différente de 0,5 souvent utilisée en pratique. Il suffit que le signal d'horloge à la valeur αR corresponde à une zone de stabilité du signal de donnée dans la période R. D'autre part, le front du signal de données TS peut être un front autre que le front de synchronisation SE. Il peut être un front de données, réel ou apparent, tels que les fronts utilisés dans le système de transmission antérieur décrit dans l'introduction de la présente demande.

## Revendications

1. Procédé d'échantillonnage de données récurrentes à une période R dans un signal de données en série (TS) incluant des fronts de référence (SE) récurrents à une période T, comprenant la génération d'au moins un signal d'horloge (CL0-CL9) ayant la période T, un calage d'horloge par rapport auxdits fronts de référence (SE) et l'échantillonnage des bits du signal de données en série, caractérisé en ce qu'il consiste à donner à la période T une valeur multiple de la période R d'un nombre entier N > 1 et en ce que le calage consiste à régler au moins ledit signal d'horloge précité pour présenter par rapport aux fronts de référence un retard de valeur (n + α) R, où α est un nombre positif inférieur à 1 et n est un nombre entier positif ou nul différent pour chaque signal d'horloge, le signal d'horloge ainsi calé étant utilisé pour échantillonner un bit respectif du signal de données en série.

2. Procédé selon la revendication 1, caractérisé en ce que les fronts de référence sont des fronts de synchronisation.

3. Procédé selon la revendication 1 ou 2, caractérisé en ce que les fronts de référence sont issus d'une information d'horloge (SE) incorporée dans le signal de données en série et le générateur d'horloge précité est un récupérateur d'horloge.

4. Procédé selon la revendication 1 ou 2, caractérisé en ce que les fronts de référence sont des fronts de données, réels ou apparents.

5. Procédé selon l'une des revendications 1 à 4, caractérisé en ce qu'il consiste en outre à mettre en ordre les bits résultant de l'échantillonnage, de façon à reconstituer un signal de sortie (Dout) identique au signal de données émis (D5).

6. Procédé selon l'une des revendications 1 à 5, caractérisé en ce que la période R est variable.

7. Dispositif d'échantillonnage de données récurrentes à une période R dans un signal de données en série (TS) incluant des fronts de référence (SE) récurrents à une période T, comprenant un générateur (42) d'au moins un signal d'horloge (CL0-CL9) ayant la période T, un circuit (43) de calage d'horloge par rapport auxdits fronts de référence, et un circuit d'échantillonnage (69), caractérisé en ce que le circuit de calage (43) comprend les moyens de réglage d'au moins ledit signal d'horloge précité pour présenter, par rapport à chaque front de référence dont la période T est multiple de la période R d'un nombre entier N > 1, un retard de valeur (n + *α*) R, où *α* est un nombre positif inférieur à 1 et n est un nombre entier positif ou nul différent pour chaque signal d'horloge, le signal d'horloge ainsi calé commandant le circuit d'échantillonnage pour échantillonner un bit respectif du signal de données en série.

8. Dispositif selon la revendication 7, caractérisé en ce que les fronts de référence sont des fronts de synchronisation.

9. Dispositif selon la revendication 7 ou 8, caractérisé en ce que les fronts de référence sont issus d'une information d'horloge (SE) incorporée dans le signal de données en série et le générateur d'horloge précité est un récupérateur d'horloge.

10. Dispositif selon la revendication 7 ou 8, caractérisé en ce que les fronts de référence sont des fronts de données, réels ou apparents.

11. Dispositif selon l'une des revendications 7 à 10, caractérisé en ce que le circuit de calage comprend un circuit verrouillé en phase (57, 58).

12. Dispositif selon l'une des revendications 7 à 11, caractérisé en ce que le retard du signal d'horloge précité sur le front de référence inclut le retard fixe correspondant au délai de cheminement du signal dans le circuit de calage.

13. Dispositif selon l'une des revendications 7 à 12, caractérisé en ce que le circuit d'échantillonnage comprend un registre respectif à chaque signal d'horloge.

14. Dispositif selon l'une des revendications 7 à 13, caractérisé en ce que le circuit d'échantillonnage forme un désérialiseur-décodeur (19).

15. Dispositif selon l'une des revendications 7 à 14, caractérisé en ce qu'il comporte un circuit de remise en ordre (20) des bits résultant de l'échantillonnage, de façon à reconstituer un signal de sortie (Dout) identique au signal de données émis (D5).

16. Dispositif selon l'une des revendications 7 à 15, caractérisé en ce que la période R est variable.

17. Système (10) de transmission numérique de données, comprenant : un émetteur (12) d'un signal de données en série (TS) récurrentes à une période R et incorporant des fronts de référence ; et un récepteur (13) incluant un dispositif d'échantillonnage défini par l'une des revendications 7 à 16.

## Claims

1. A method for sampling recurrent data with a period R in a serial data signal (TS) including recurrent reference fronts (SE) with a period T, comprising the generation of at least one clock signal (CL0-CL9) having the period T, clock timing relative to said reference fronts (SE) and sampling of the bits of the serial data signal, characterised in that it consists of giving the period T a value that is a multiple of the period R by a whole number N > 1 and in that the timing consists of setting at least said clock signal as aforementioned so as to have, in relation to the reference fronts, a delay of a value (n + α) R, where α is a positive number less than 1 and n is a positive whole number or zero, different for each clock signal, the clock signal thus timed being used for sampling a respective bit of the serial data signal.

2. A method according to Claim 1, characterised in that the reference fronts are synchronisation fronts.

3. A method according to Claim 1 or 2, characterised in that the reference fronts come from clock information (SE) incorporated in the serial data signal and the aforementioned clock generator is a clock recovery device.

4. A method according to Claim 1 or 2, characterised in that the reference fronts are real or apparent data fronts.

5. A method according to one of Claims 1 to 4, characterised in that it further consists in putting in order the bits resulting from sampling, so as to reconstitute an output signal (Dout) identical to the data signal emitted (D5).

6. A method according to Claims 1 to 5, characterised in that the period R is variable.

7. A device for sampling recurrent data with a period R in a serial data signal (TS) including recurrent reference fronts (SE) with a period T, comprising a generator (42) of at least one clock signal (CL0-CL9) having the period T, a circuit (43) for clock timing relative to said reference fronts, and a sampling circuit (69), characterised in that the timing circuit (43) comprises the means for setting at least said clock signal as aforementioned so as to have, in relation to each reference front, the period T of which is a multiple of the period R by a whole number N > 1, a delay of a value (n + α) R, where α is a positive number less than 1 and n is a positive whole number or zero, different for each clock signal, the clock signal thus timed controlling the sampling circuit in order to sample a respective bit of the serial data signal.

8. A device according to Claim 7, characterised in that the reference fronts are synchronisation fronts.

9. A device according to Claim 7 or 8, characterised in that the reference fronts come from clock information (SE) incorporated in the serial data signal and the aforementioned clock generator is a clock recovery device.

10. A device according to Claim 7 or 8, characterised in that the reference fronts are real or apparent data fronts.

11. A device according to one of Claims 7 to 10, characterised in that the timing circuit comprises a phase-locked circuit (57, 58).

12. A device according to one of Claims 7 to 11, characterised in that the delay of the aforementioned clock signal on the reference front includes the fixed delay corresponding to the time it takes for the signal to travel over the timing circuit.

13. A device according to one of Claims 7 to 12, characterised in that the sampling circuit comprises a register in respect of each clock signal.

14. A device according to one of Claims 7 to 13, characterised in that the sampling circuit forms a serial-to-parallel converter/decoder (19).

15. A device according to one of Claims 7 to 14, characterised in that it comprises a circuit (20) for putting back in order the bits resulting from sampling, so as to reconstitute an output signal (Dout) identical to the data signal emitted (D5).

16. A device according to one of Claims 7 to 15, characterised in that the period R is variable.

17. A digital data transmission system (10) comprising: a transmitter (12) of a signal for recurrent serial data (TS) with a period R and incorporating reference fronts; and a receiver (13) including a sampling device as defined by one of Claims 7 to 16.

## Patentansprüche

1. Abtastverfahren für rekurrente Daten mit einer Periode R in einem seriellen Datensignal (TS), das rekurrente Referenzflanken (SE) mit einer Periode T enthält, mit der Erzeugung wenigstens eines Taktsignals (CL0-CL9), das die Periode T besitzt, einer Taktverriegelung in bezug auf die Referenzflanken (SE) sowie einer Abtastung der Bits des seriellen Datensignals, dadurch gekennzeichnet, daß es darin besteht, der Periode T einen Wert zu verleihen, der ein ganzzahliges Vielfaches mit der Multiplizität N > 1 der Periode R ist, und daß die Verriegelung darin besteht, wenigstens das obengenannte Taktsignal so einzustellen, daß es in bezug auf die Referenzflanken eine Verzögerung mit Wert (n + α)R aufweist, wobei α eine positive Zahl kleiner als 1 ist und n eine positive ganze Zahl oder Null ist, die für jedes Taktsignal verschieden ist, wobei das auf diese Weise verriegelte Taktsignal dazu verwendet wird, ein entsprechendes Bit des seriellen Datensignals abzutasten.

2. Verfahren nach Anspruch 1, dadurch gekennzeichnet, daß die Referenzflanken Synchronisationsflanken sind.

3. Verfahren nach Anspruch 1 oder 2, dadurch gekennzeichnet, daß die Referenzflanken von einer in dem seriellen Datensignal enthaltenen Taktinformation (SE) stammen und der obengenannte Taktgenerator eine Taktrückgewinnungseinrichtung ist.

4. Verfahren nach Anspruch 1 oder 2, dadurch gekennzeichnet, daß die Referenzflanken wirkliche oder scheinbare Datenflanken sind.

5. Verfahren nach einem der Ansprüche 1 bis 4, dadurch gekennzeichnet, daß es außerdem darin besteht, die aus der Abtastung sich ergebenden Bits in der Weise zu ordnen, daß ein Ausgangssignal (Dout) wiederhergestellt wird, das mit dem ausgesendeten Datensignal (D5) völlig übereinstimmt.

6. Verfahren nach einem der Ansprüche 1 bis 5, dadurch gekennzeichnet, daß die Periode R veränderlich ist.

7. Abtastvorrichtung für rekurrente Daten mit einer Periode R in einem seriellen Datensignal (TS), das rekurrente Referenzflanken (SE) mit einer Periode T enthält, mit einem Generator (42) für wenigstens ein Taktsignal (CL0-CL9), das die Periode T besitzt, einer Schaltung (43) zur Verriegelung des Takts in bezug auf die Referenzflanken und einer Abtastschaltung (69), dadurch gekennzeichnet, daß die Verriegelungsschaltung (43) Mittel zum Einstellen wenigstens des obengenannten Taktsignals enthält, damit es in bezug auf jede Referenzflanke, deren Periode T ein ganzzahliges Vielfaches mit der Multiplizität N > 1 der Periode R ist, eine Verzögerung mit Wert (n + α)R aufweist, wobei α eine positive Zahl kleiner als 1 ist und n eine positive ganze Zahl oder Null ist, die für jedes Taktsignal verschieden ist, wobei das auf diese Weise verriegelte Taktsignal die Abtastschaltung steuert, um ein entsprechendes Bit des seriellen Datensignals abzutasten.

8. Vorrichtung nach Anspruch 7, dadurch gekennzeichnet, daß die Referenzflanken Synchronisationsflanken sind.

9. Vorrichtung nach Anspruch 7 oder 8, dadurch gekennzeichnet, daß die Referenzflanken von einer in dem seriellen Datensignal enthaltenen Taktinformation (SE) stammen und der obengenannte Taktgenerator eine Taktrückgewinnungseinrichtung ist.

10. Vorrichtung nach Anspruch 7 oder 8, dadurch gekennzeichnet, daß die Referenzflanken wirkliche oder scheinbare Datenflanken sind.

11. Vorrichtung nach einem der Ansprüche 7 bis 10, dadurch gekennzeichnet, daß die Verriegelungsschaltung eine Phasenverriegelungsschaltung (57, 58) enthält.

12. Vorrichtung nach einem der Ansprüche 7 bis 11, dadurch gekennzeichnet, daß die obengenannte Verzögerung des Taktsignals bezüglich der Referenzflanke die feste Verzögerung enthält, die der Laufzeitverzögerung des Signals in der Verriegelungsschaltung entspricht.

13. Vorrichtung nach einem der Ansprüche 7 bis 12, dadurch gekennzeichnet, daß die Abtastschaltung für jedes Taktsignal ein entsprechendes Register enthält.

14. Vorrichtung nach einem der Ansprüche 7 bis 13, dadurch gekennzeichnet, daß die Abtastschaltung einen Deserialisierer-Decodierer (19) bildet.

15. Vorrichtung nach einem der Ansprüche 7 bis 14, dadurch gekennzeichnet, daß sie eine Reihenfolgen-Rücksetzschaltung (20) für die aus der Abtastung sich ergebenden Bits enthält, derart, daß ein Ausgangssignal (Dout) wiederhergestellt wird, das mit dem ausgesendeten Datensignal (D5) völlig übereinstimmt.

16. Vorrichtung nach einem der Ansprüche 7 bis 15, dadurch gekennzeichnet, daß die Periode R veränderlich ist.

17. Digitales Datenübertragungssystem, mit: einem Sender (12) eines Signals (TS) von seriellen rekurrenten Daten mit einer Periode R, das Referenzflanken enthält; und einer Rückgewinnungseinrichtung (13), die eine durch einen der Ansprüche 7 bis 16 definierte Abtastvorrichtung enthält.
